**Europäisches Patentamt**

**European Patent Office**

**Office européen des brevets**

(11) Veröffentlichungsnummer: **0 135 595 B1**

# EUROPÄISCHE PATENTSCHRIFT

(45) Veröffentlichungstag der Patentschrift:
**21.09.88**

(21) Anmeldenummer: **83106709.5**

(22) Anmeldetag: **08.07.83**

(51) Int. Cl.⁴: **B 29 C 69/00,** B 29 B 17/00,
B 05 D 1/26, B 05 D 1/38,
E 04 F 15/16, E 01 C 13/00

(54) **Verfahren zur Herstellung eines Boden- oder dergl. Belags als ein- oder mehrschichtige Bahnenware sowie die Verwendung dieser Bahnenware als Bodenbelag für Sportfelder und Sporthallen.**

(43) Veröffentlichungstag der Anmeldung:
**03.04.85 Patentblatt 85/14**

(45) Bekanntmachung des Hinweises auf die Patenterteilung:
**21.09.88 Patentblatt 88/38**

(84) Benannte Vertragsstaaten:
**AT BE CH DE FR GB LI NL**

(56) Entgegenhaltungen:
**DE-A-1 658 448**
**DE-A-2 540 193**
**FR-A-1 246 398**
**FR-A-2 221 465**
**GB-A-624 716**
**GB-A-1 178 949**
**GB-A-2 035 336**
**US-A-2 823 156**

(73) Patentinhaber: **Arnds, Dieter, Bisamweg 13, D-4803 Steinhagen (DE)**

(72) Erfinder: **Arnds, Dieter, Bisamweg 13, D-4803 Steinhagen (DE)**

(74) Vertreter: **Allgeier, Kurt, Friedrichstrasse 24, D-7888 Rheinfelden (DE)**

LIBER, STOCKHOLM 1988

## Beschreibung

Die Erfindung betrifft ein Verfahren zur Herstellung eines Boden- oder dergl. Belags in Form einer Bahn aus einer verdichteten Mischung aus Gummiteilchen, insbesondere Gummiabfällen, und einem Bindemittel sowie die Verwedung eines solchen Belages.

Zur Herstellung von derartigen Bodenbelägen in Form von Platten oder Bahnen ist es durch die DE-A-1 658 448 bekannt geworden, ein Gemisch aus granulierten Gummiabfällen aus der Reifenherstellung oder Altreifenverwertung, Füllstoffen und Bindemitteln unter Druckanwendung und erforderlichenfalls unter Wärmezufuhr zu verdichten.

Ferner ist beispielsweise in der GB-A-624 716 vorgeschlagen worden, zur Herstellung von mehrschichtigen Bahnen eines Laminat- oder Fiber-Materials ein in hintereinander angeordneten Öfen verflüssigtes Ausgangsmaterial auf einen Band-Förderer aufzugeben.

Außerdem ist es zur Herstellung von Bahnenware aus Fasergeweben und Kunststoffen für Bodenbeläge auch bekannt, die Gewebebahnen in eine langgestreckte feststehende Form einzulegen und die Kunststoffbeschichtung mittels einer über der Gewebebahn hin und her beweglichen Auspreßvorrichtung aufzubringen. Nach einem weiteren Verfahren werden die Gewebebahnen und die Kunststoffauflage in einen heizbaren Metallzylinder eingebracht. Beide Verfahren arbeiten diskontinuierlich, da nach dem Aufbringen der zu verbindenden Schichten die Aushärtungsphase abgewartet werden muß, ehe die erzeugte Bahn entnommen werden kann.

Der Erfindung liegt die Aufgabe zugrunde, ein Verfahren anzugehen, welches es ermöglicht, eine Bahnenware im kontinuierlichen Fertigungsprozeß herzustellen und dabei als Hauptbestandteil Gummiabfälle und/oder Granulat aus Neu- oder Altgummi zu verarbeiten. Diese Aufgabe wird dadurch gelöst, daß auf ein umlaufendes, endloses Transportband in gleichmäßiger ebener Verteilung eine Schicht aus einer bereits anreagierten Mischung aus zerkleinerten Gummiabfällen und/oder Gummigranulat aus Neu- oder Altgummi mit einem Prepolymer als lösungsmittelfreiem Einkomponenten-Bindemittel kontinuierlich aufgebracht und darauf örtlich kurzphasig verdichtet wird, und daß die Schicht darauf durch eine Klimakammer hindurchgeführt und dabei rasch und gleichmäßig ausgehärtet wird.

Die vorgeschlagene Lösung der kontinuierlichen Fertigung auf einem endlosen Transportband bringt gegenüber den bekannten diskontinuierlichen Verfahren den erheblichen Vorteil mit sich, daß die Verdichtungs- und die Aushärtungsphase nicht eine Unterbrechung der Herstellung bedingt, weil sie in den Fertigungsprozeß einbezogen ist. Dadurch wird erreicht, daß die Gesamtanlage wegen der nicht unterbrochenen Fertigung ein wesentlich höheres Ausbringen und damit eine wirtschaftlichere Ausnutzung der Einrichtung ermöglicht.

Ein weiterer großer Vorteil besteht ferner darin, daß bei der erfindungsgemäßen kontinuierlichen Verfahrensweise die Parameter der einzelnen Teilprozesse in einfacher Weise variierbar sind und daher besser den produktbedingten Verfahrenserfordernissen angepaßt werden können. Die Verdichtungsphase kann z. B. durch entsprechende Einstellung der benutzten Verdichtungsmittel in Dauer und/oder Intensität der Einwirkung verändert werden, oder es können die benutzten Verdichtungsmittel als Vorrichtung ausgetauscht werden; gleiches gilt auch für die Aushärtungsphase. Die nach dem Aushärten vom Transportband ablaufende fertige Bahn wird mittels bekannter Vorrichtungen auf Handels- bzw. Versandlängen geschnitten und zu Rollen aufgewickelt

Das erfindungsgemäße Verfahren ermöglicht es außerdem in einfacher Weise, die herzustellende Bahnenware in ihrer Beschaffenheit durch zusätzliche Behandlungen zu verändern, insbesondere durch Auflage weiterer Schichten. Hierzu bedarf es lediglich des Einfügens weiterer Behandlungsstationen in den Transportweg.

Eine derartige Erweiterung der Behandlung besteht beispielsweise darin, daß auf die Schicht vor der Klimakammer eine zweite Schicht in gleichmäßiger ebener Verteilung aus einer Mischung aus EPDM-Granulaten mit einem Prepolymer als lösungsmittelfreiem Einkomponenten-Bindemittel auf das Transportband aufgebracht und zur raschen gleichmäßigen Aushärtung zusammen mit der ersten Schicht durch die Klimakammer hindurchgeführt wird.

In Abwandlung dieser Verfahrensweise kann es auch vorteilhaft sein, daß auf die Schicht nach der Klimakammer eine zweite Schicht in gleichmäßiger ebener Verteilung aus einer Mischung aus EPDM-Granulaten mit einem Prepolymer als lösungsmittelfreiem Einkomponenten-Bindemittel auf das Transportband aufgebracht und zur raschen gleichmäßigen Aushärtung zusammen mit der ersten Schicht durch eine zweite Klimakammer hindurchgeführt wird.

Dabei ist es ferner vorteilhaft, nach dem Aufbringen der zweiten Schicht diese örtlich kurzphasig zu verdichten.

Nach weiteren wesentlichen Verfahrensmerkmalen kann die Verdichtung mittels einer Druckvorrichtung oder mittels eines Vibrators erfolgen, dabei kann die Druckvorrichtung als Durckwalze ausgebildet sein.

Eine weitere Abwandlung der Erfindung besteht noch darin, daß vor dem Aufbringen der ersten Schicht auf das Band ein textiles Gittergewebe bzw. ein Textilteppich auf das Band aufgebracht, und in der darauf aufgebrachten ersten Schicht fixiert wird.

Ferner kann es erfindungsgemäß noch vorteilhaft sein, daß als Deckschicht vor oder nach der ersten Klimakammer ein weiterer Oberbelag aus Polyurethan-Farben, Polyurethan-Beschichtungen, Teppichen oder Gittergeweben auf die jeweils oberste Schicht aufgebracht wird.

Mittels der erfindungsgemäß vorgeschlagenen Verfahrensweisen ist es möglich, in einer technisch wenig aufwendigen Verfahrens-Anlage in kontinuierlicher Fertigung ein hohes Ausbringen an Bahnenware zu erzielen und dabei fakultativ die Möglichkeit zur Verwertung von Altgummi zu eröffnen. Zwar ist die Wiederverwertung von Altgummi z. B. Gummiabfällen oder zerkleinerten Gummiteilen bereits bekannt, beispielsweise durch die GB-PS 492 811, nach welcher aus fein vermahlenem Altgummi und härtbaren Phenol-Aldehyd-Harzen mit Hilfe von Lösungsmitteln ein formbares Material gewonnen werden kann. Die Verfahrensweise ist sehr aufwendig und erfordert große Mengen von Lösungsmitteln. Nach der FR-PS-1 150 138 werden zerkleinerte Polyurethan-Abfälle mit einer Mischung aus Polyester, Polysocyanat, einem Weichmacher und einem Lösungsmittel versetzt, in eine Form gegeben und unter Druck zu einem unzersetzbaren, hochelastischen Material ausgehärtet, es kann zusätzlich Latex oder Kautschuckschaum zur Verbesserung der Elastizität zugeführt werden. Außerdem ist es aus der US-PS-2 977 864 bekannt, Gummischnitzel mit einer dünnen, etwas Gummi enthaltenden Asphaltschicht zu überziehen und unter Anwendung von Druck und Wärme ein teilelastisches Material erzeugen, welches sich u.a. für Grundflächen von Kinderspielplätzen oder Sportanlagen eignet. Die Herstellung ist sehr aufwendig und umständlich und setzt das Verarbeiten in heißem Zustand voraus, so daß sie vorzugsweise am Verwendungsort erfolgen soll.

Besonders bei Baustellen im Außenbereich sind diese Arbeiten den Witterungsverhältnissen ausgesetzt. Abgesehen von den Nachteilen durch Wartestunden und witterungs- und/oderherstellungsbedingten Qualitätsminderungen, besonders bei ungünstigen klimatischen Bedingungen, sind diese Verfahren äusserst aufwendig und unwirtschaftlich.

Die DE-PS-1 720 059 offenbart ein Verfahren zur Herstellung von Formkörpern aus zerkleinerten bzw. gemahlenem kompaktem Altgummi, dessen Teilchen mit einem härtbaren Kunstharz durchmischt werden, das im ausgehärteten Zustand als Bindemittel die Zwischenräume zwischen den Altgummiteilchen ganz oder teilweise erfüllt, bei dem die Altgummiteilchen in Form von Gummi-Schrot bzw. Schnitzeln in einem Mischer durchgemischt werden und während des Mischvorganges die das Bindemittel bildenden Diisocyanate und Polyole einschließlich eines Treibmittels sowie die Benetzung fördernden Lösungsmittel getrennt zugeführt und in einen Mischer eingesprüht werden, und daß nach weiterem Durchmischen das Mischgut zum Aushärten in eine Form eingegeben wird, und wobei gegebenenfalls anschließend in an sich bekannter Weise der Formkörper mindestens einseitig mit einer Folie oder einer PVC-Abdeckung bzw. Ummantelung versehen wird.

Diese Verfahrensweise erfordert hohe Zugaben an Kunstharz und an Treib- und Lösungsmitteln sowie eines Katalysationsmittels, um einmal die Zwischenräume zwischen den Altgummiteilchen auszufüllen und vor allem, um zur Erzielung einer ausreichenden Homogenisierung im Mischer die Oberflächen der Gummiteile zu benetzen und das Material unter einem erheblichen Zeitaufwand ausreichend zu verarbeiten und es dann in Formen zu geben, wo es unter Druckanwendung in einer oder mehreren Stunden aushärtet. Zur Verarbeitung von 216 kg Altgummi werden nach diesem Verfahren fast 90 kg (also 41 %) Zugaben benötigt, um daraus in mehreren Stunden einen Körper von 280 kg zu erzeugen.

Ein sehr schwerwiegender Nachteil der bekannten Verfahren besteht darin, daß diese mit den üblichen gesundheitsschädlichen Binde- und Lösungsmitteln arbeiten. Diese enthalten Aceton und mit diesem verwandte Verbindungen, insbesondere Cyansäuren und Derivate, deren Dämpfe in hohem Maße gefährlich sind und aufwendige Schutzmaßnahmen, z. B. Absaugvorrichtungen und das Tragen von Atemschutzmasken erfordern, unter den herrschenden Betriebsbedingungen, insbesondere Temperaturen, können solche Atemschutzgeräte meist nur zwei Stunden getragen werden.

Demgegenüber zeichnet sich das erfindungsgemäße Verfahren zur kontinuierlichen Herstellung von ein- oder mehrschichtiger Bahnenware durch mehrere, sehr ins Gewicht fallende Vorteile gegenüber dem gesamten Stand der Technik aus. Durch die grundsätzliche Verwendung von lösungsmittelfreien Einkomponenten-Bindemitteln, die monomer-frei oder extrem monomer-arm sind, wird die Entstehung der gefährlichen Dämpfe, die in starkem Maße lungenkrebserzeugend sind, völlig vermieden, bzw. treten diese in so schwacher Verdünnung auf, daß sie unschädlich sind oder mit den üblichen Schutzmaßnahmen (Absaugung) ohne Gefährdung von Menschen abgeführt werden können.

Ein weiterer gewichtiger Vorteil des erfindungsgemäßen Verfahrens liegt in der Einsparung an Bindemittelmengen. Versuche haben ergeben, daß zur Verarbeitung von 200 kg Gummiabfällen bzw. Gummigranulat eine Bindemittelmenge zwischen 16 und 20 kg erforderlich ist, also zwischen 8 und 10 % der Ausgangsmenge. Dieser Aufwand an Bindemitteln beträgt somit weniger als 25 % der Bindemittelmenge gegenüber dem obenbeschriebenen Verfahren gemäß DE-PS-1 720 059. Auch gegenüber allen anderen bekannten Verfahren bestehen derartige und teils noch höhere Einsparungsquoten an Binde- und Lösungsmittelaufwand.

Ein weiterer großer Vorzug des Verfahrens nach der Erfindung ist in einer ganz erheblichen Verkürzung der Fertigungszeit zu sehen, weil das Aushärten auf dem Transportband in der Klimakammer nur ca. 8 bis 10 Minuten in Anspruch nimmt. Dadurch verringert sich der Zeitaufwand gegenüber bekannten Verfahren auf 10 bis 20 %.

Besonders vorteilhaft wirkt sich bei dem Verfahren nach der Erfindung aus, daß mit den Gummiteilchen ein lösungsmittelfreies Einkomponenten-Bindemittel vermischt und das rasch anreagierte Mischgut sofort auf das Transportband aufgegeben wird. Durch ein Verdichtungsgerät erfolgt kurzphasig eine ausreichende Verdichtung ohne langwierigen Preßdruck oder Formen bzw. formähnliche Vorrichtungen. Das Aushärten erfolgt unter Wärme und hoher Luftfeuchtigkeit im Durchlauf durch die Klimakammer.

Nach einer Verfahrensausgestaltung ist es möglich, vor dem Aufbringen der ersten Schicht auf das Transportband ein textiles Gittergewebe bzw. einen Textilteppich auf das Band aufzubringen, um es bei dem darauffolgenden Verfahrensgang in der ersten Schicht zu fixieren. Zu diesem Zweck ist vorgesehen, daß der Auspreß- und Aufgabevorrichtung eine Bobine mit einer aufgerollten Bahn aus einem textilen Gittergewebe oder einem Textilteppich vorgeschaltet ist, die zum Ausbreiten und Auflegen der Textilbahn auf das Transportband mit dessen Momentangeschwindigkeit eingerichtet ist.

Eine weitere Verfahrensausgestaltung besteht noch darin, daß als Deckschicht vor oder nach der ersten Klimakammer ein weiterer Oberbelag aus Polyurethan-Farben, Polyurethan-Beschichtungen, Teppichen oder Gittergeweben auf die jeweils oberste Schicht aufgebracht werden kann. Hierzu ist vorgesehen, bei der in Transportrichtung vor der letzten Klimakammer bzw. Klima-Teilkammer oder vor der letzten Verdichtungsphase das weitere Auspressen des zum Aufbringen eines als Deckschicht vorgesehenen Belages aus Polyurethan-Farbe oder Polyurethan-Beschichtung auf die zuvor aufgebrachte Schicht durchzuführen.

Das Herstellungsverfahren nach der Erfindung vereinigt daher eine größere Anzahl von Vorteilen gegenüber dem Stand der Technik in sich, die auf mehreren Gebieten der Herstellung liegen. Der technische Aufwand des Herstellungsverfahrens ist dadurch erheblich geringer, da der Mischvorgang vor der Aufgabe auf das Transportband erheblich geringer ist und in einem weitaus kürzeren Zeitraum abläuft. Das Mischen findet - wie die Aufgabe auf das Band - kontinuierlich statt, ebenso wie die Materialzugabe. Auch die Fertigungsdauer auf das Transportband ist gegenüber dem Bekannten außergewöhnlich verkürzt. Vor allem aber ist durch die erfindungsgemäße Verfahrensführung der apparative Aufwand sowohl für das Mischen wie für das Fertigen, also die Aufgabe auf das Band, das Verdichten und das Aushärten auch vorrichtungsmäßig ganz erheblich vereinfacht und in geringerem Maße störanfällig. Schließlich bietet auch das fertige Produkt, die Bahnenware, wegen ihrer ausgeprägten Elastizität und trotzdem hohen Festigkeit im Gebrauch außerordentliche Vorteile. Im Bedarfsfall kann die Festigkeit durch mehrschichtige Fertigung erheblich gesteigert werden.

Ein zusätzlicher Gegenstand der Erfindung bezieht sich auf die Verwendung der Bahnenware, die nach dem erfindungsgemäßen Verfahren hergestellt ist als Bodenbelag für Sportfelder und Sporthallen.

Bisher werden für synthetische Beläge befestigte Unterbauten aus Beton, Bitumen, Holz oder dergl. stabile Unterlagen benötigt. Die Erfahrung hat erwiesen, daß diese befestigten Unterbauten, insbesondere bei der Herstellung von Belägen größerer Flächenausdehnung, wie dies bei Sportfeldern und Sporthallen der Fall ist, große Schwierigkeiten bereiten. Darüber hinaus ist bei solchen Unterbauten nachteilig, daß sie einen erheblichen Teil der den synthetischen Belägen eigenen Elastizität eliminieren, so daß sie beim Begehen oder Bespringen nicht mehr nutzbar ist. Dadurch können gesundheitliche Schäden am menschlichen Bewegungsapparat hervorgerufen werden. Es besteht daher das Bedürfnis, einen Bodenbelag insbesondere zur Verwendung in Sportstätten und Sporthallen zu schaffen, bei dem die günstigen elastischen Eigenschaften der nach dem erfindungsgemäßen Verfahren hergestellten Bahnenware nicht beeinträchtigt werden, sondern voll zur Auswirkung gelangen.

Es wird daher erfindungsgemäß die Verwendung eines Boden- oder dergl. Belags in Form einer Bahn aus Gummiteilchen, insbesondere Gummiabfällen, und einem Bindemittel, hergestellt nach dem Verfahren gemäß den Ansprüchen 1 bis 9, mit einem Unterbelag aus textilem Gittergewebe oder Textilteppich, als Bodenbelag für Sportfelder oder Sporthallen in der Weise vorgeschlagen, daß einzelne Bahnen unmittelbar auf eine verdichtete Tragschicht aus Sand, Kies, Splitte, Mineralbeton oder Mischungen aus diesen Materialien unter leichter Vorspannung lose aufgelegt und an ihren Unterseiten mittels Kunststoffstreifen aus denselben Textilmaterialien, aus denen der Bahnenunterbelag besteht, miteinander zu einer einheitlichen, verbundenen Fläche verklebt werden.

Bei einem solchen Aufbau eines Bodenbelags für sportliche Zwecke können die Vorteile der Elastizität der erfindungsgemäßen Bahnenware vorteilhaft zur Wirkung gelangen. Neben den sportfunktionell und sportmedizinisch günstigen Eigenschaften treten die Einsparungen an technischem Aufwand im Bereich der Unterbauten aus Beton, Bitumen und dergl., außerdem ist aus wirtschaftlichen Gründen möglich, ganze Beläge von Sportfeldern oder Sporthallen in loser Verlegung herzustellen, die auch unter Witterungseinflüssen ihre Dimensionen nicht verändern und eine außerordentlich hohe Gebrauchsqualität aufweisen.

In der Zeichnung ist ein Ausführungsbeispiel der Erfindung zur Herstellung der Bahnenware sowie eines aus der Bahnenware hergestellten Bodenbelages schematisch dargestellt und im folgenden näher beschrieben:

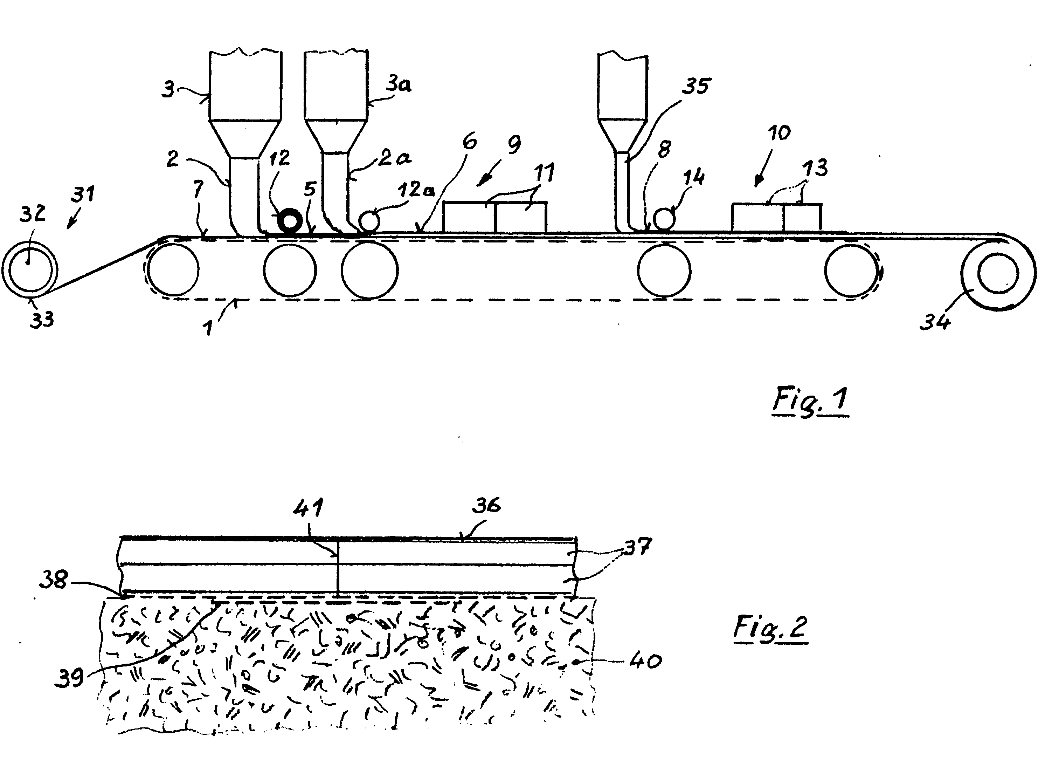

In Fig. 1 ist das Transportband mit 1 bezeichnet. Aus einem Vorratsbehälter 3 wird mittels einer Auspreß- und Aufgabevorrichtung 2 die Schicht 5 der bereits anreagierten Mischung auf das Transportband 1 aufgebracht und mittels der Druckwalze 12 verdichtet.

Außerdem ist eine zweite Auspreß- und Aufgabevorrichtung 2a vorgesehen, mittels welcher aus einem zweiten Vorratsbehälter 3a eine zweite Schicht 6 auf die erste Schicht 5 aufgebracht und mittels der nachgeschalteten, ebenfalls als Druckwalze 12a ausgebildeten Verdichtungsvorrichtung verdichtet wird.

Die so auf das Transportband 1 aufgebrachten Schichten 5 und 6 durchlaufen die Klimakammer 9, welche aus zwei Teilkammern 11 besteht.

Bei dem dargestellten Ausführungsbeispiel wird vor dem Aufbringen der ersten Schicht 5 auf das Transportband ein textiles Gittergewebe 7 auf das Transportband aufgebracht und durch den folgenden Prozeß in der ersten Schicht 5 fixiert. Zum Aufbringen des textilen Gittergewebes bzw. eines Textilteppichs dient eine Abroll- und Auflagevorrichtung 31, die eine Bobine 32 mit einer aufgerollten Bahn 33 enthält und mit welcher die Textilbahn auf das Transportband 1 mit dessen Momentangeschwindigkeit aufgelegt wird.

Vor der letzten Klimakammer 10 mit den Teilkammern 13 ist eine weitere Auspreß- und Aufgabevorrichtung 35 angeordnet, die zum Aufbringen eines Oberbelages 8 dient, welcher aus Polyurethan-Farben, Polyurethan-Beschichtungen, Teppichen oder Gittergeweben bestehen kann. Nach Auflegen des Oberbelages 8 wird dieser zunächst mittels einer weiteren Druckwalze 14 verdichtet und durch die Klimakammer 10 geführt. Mit 34 ist die Aufrollvorrichtung für die fertige Bahnenware bezeichnet.

In. Fig. 2 ist ein Ausführungsbeispiel für einen Bodenbelag, vorzugsweise für Sportfelder oder Sporthallen, schematisch dargestellt. Der Belag besteht aus der ggf. gefärbten Deckschicht 36 aus Polyurethan-Beschichtung, einem Teppich oder einem Gittergewebe, der Ober- und Unterschicht 37 sowie dem Unterbelag 38 aus dem textilen Gittergewebe. Zur dauerhaften Verbindung zweier aneinander anliegender Bahnen wird die Trennfuge 41 mittels eines Kunststoffstreifens 39 an der Unterseite zu einer einheitlichen Fläche verklebt, wobei der Kunststoffstreifen 39 aus demselben Textilmaterial wie der Unterbelag 38 besteht. Die Bahnen werden nacheinander auf eine verdichtete Tragschicht 40 aufgelegt und verklebt, die aus Sand, Kies, Splitte, Mineralbeton oder einer Mischung aus diesen Stoffen hergestellt sein kann.

## Patentansprüche

1. Verfahren zur Herstellung eines Boden- oder dergl. Belages in Form einer Bahn aus einer verdichteten Mischung aus Gummiteilchen, insbesondere Gummiabfällen, und einem Bindemittel,
dadurch gekennzeichnet,
daß auf ein umlaufendes, endloses Transportband (1) in gleichmäßiger ebener Verteilung eine Schicht (5) aus einer bereits anreagierten Mischung aus zerkleinerten Gummiabfällen und/oder Gummigranulat aus Neu- oder Altgummi mit einem Prepolymer als lösungsmittelfreiem Einkomponenten-Bindemittel kontiniuerlich aufgebracht und darauf örtlich kurzphasig verdichtet wird, und daß die Schicht (5) darauf durch eine Klimakammer (9) hindurchgeführt und dabei rasch und gleichmäßig ausgehärtet wird.

2. Verfahren nach Anspruch 1
dadurch gekennzeichnet,
daß auf die Schicht (5) vor der Klimakammer (9) eine zweite Schicht (6) in gleichmäßiger ebener Verteilung aus einer Mischung aus EPDM-Granulaten mit einem Prepolymer als lösungsmittelfreiem Einkomponenten-Bindemittel auf das Transportband (1) aufgebracht und zur raschen gleichmäßigen Aushärtung zusammen mit der ersten Schicht (5) durch die Klimakammer (9) hindurchgeführt wird.

3. Verfahren nach Anspruch 1
dadurch gekennzeichnet,
daß auf die Schicht (5) nach der Klimakammer (9) eine zweite Schicht (6) in gleichmäßiger ebener Verteilung aus einer Mischung aus EPDM-Granulaten mit einem Prepolymer als lösungsmittelfreiem Einkomponenten-Bindemittel auf das Transportband (1) aufgebracht und zur raschen gleichmäßigen Aushärtung zusammen mit der ersten Schicht (5) durch eine zweite Klimakammer (10) hindurchgeführt wird.

4. Verfahren nach den Ansprüchen 2 oder 3
dadurch gekennzeichnet,
daß nach dem Aufbringen der zweiten Schicht (6) diese Schichten (5, 6) örtlich kurzphasig verdichtet werden.

5. Verfahren nach den Ansprüchen 1 bis 4
dadurch gekennzeichnet,
daß die Verdichtung mittels einer Druckvorrichtung (12) oder einem Vibrator erfolgt.

6. Verfahren nach Anspruch 5
dadurch gekennzeichnet,

daß die Druckvorrichtung (12) eine Druckwalze ist.

7. Verfahren nach den Ansprüchen 2 und 3 dadurch gekennzeichnet,

daß die zweite Schicht aus den EPDM-Granulaten (6) gefärbt ist.

8. Verfahren nach Anspruch 1 und/oder einem oder mehreren der folgenden Ansprüche dadurch gekennzeichnet,

daß vor dem Aufbringen der ersten Schicht (5) auf das Band (1) ein textiles Gittergewebe bzw. ein Textilteppich (7) auf das Band (1) aufgebracht, und in der darauf aufgebrachten ersten Schicht (5) fixiert wird.

9. Verfahren nach Anspruch 1 und/oder einem oder mehreren der folgenden Ansprüche dadurch gekennzeichnet,

daß als Deckschicht vor oder nach der ersten Klimakammer (9) ein weiterer Oberbelag (8) aus Polyurethan-Farben, Polyurethan-Beschichtungen, Teppichen oder Gittergeweben auf die jeweils oberste Schicht (5 oder 6) aufgebracht wird.

10. Verwendung eines Boden- oder dergl. Belags in Form einer Bahn aus Gummiteilchen, insbesondere Gummiabfällen, und einem Bindemittel hergestellt nach dem Verfahren gemäß den Ansprüchen 1 bis 9, mit einem Unterbelag aus textilem Gittergewebe oder Textilteppich, als Bodenbelag für Sportfelder oder Sporthallen,

dadurch gekennzeichnet,

daß einzelne Bahnen unmittelbar auf eine verdichtete Tragschicht (40) aus Sand, Kies, Splitte, Mineralbeton oder Mischungen aus diesen Materialien unter leichter Vorspanung lose aufgelegt und an ihren Unterseiten mittels Kunststoffstreifen aus denselben Textilmaterialien, aus denen der Bahnenunterbelag besteht, miteinander zu einer einheitlichen, verbundenen Fläche verklebt werden.

**Claims**

1. Method for manufacturing a floor covering in the form of a width consisting of a mix of compressed rubber particles, especially of waste rubber and a binder,

featured by the fact

that a layer (5) of disintegrated waste rubber and/or granules of new or scrap rubber containing a prepolymer as a solvent- free single-component binder, of which the reaction has already been triggered, is continuously applied onto and evenly spread over a rotating endless belt conveyor (1) and compressed thereon locally within short, further that the layer (5) thereon is passed through a climatic chamber (9) and, during the pass, it cures in a fast and even manner.

2. Method according to claim 1, featured by the fact

that onto the layer (5), supported by the belt conveyor (1) but still before the climatic chamber (9), a second layer (6) of an evenly spread mix of EPDM granules containing a prepolymer as a solvent-free single-component binder is applied and passed through the climatic chamber (9) together with the first layer (5) for a fast and even curing.

3. Method according to claim 1, featured by the fact

that onto the layer (5), supported by the belt conveyor (1) and already after the climatic chamber (9), a second layer (6) of an evenly spread mix of EPDM granules containing a prepolymer as a solvent-free single-component binder is applied and passed through a second climatic chamber (10) together with the first layer (5) for a fast and even curing.

4. Method according to claim 2 or 3, featured by the fact

that on application of the second layer (6), these layers (5, 6) are locally compressed within short.

5. Method according to claims 1 to 4, featured by the fact

that the compression is obtained using a pressure device (12) or a vibrator.

6. Method according to claim 5, featured by the fact

that the pressure device (12) has been designed as a compressing roller.

7. Method according to claims 2 and 3, featured by the fact

that the second layer of EPDM granules (6) has been coloured.

8. Method according to claim 1 and/or one or several of the following claims, featured by the fact

that prior to the application of the first layer (5) onto the belt conveyor (1), a textile lattice or carpet (7) is laid on the belt conveyor (1) and then imbedded into the first layer (5) thereon.

9. Method according to claim 1 and/or one or several of the following claims, featured by the fact

that before or after the first climatic chamber (9), a further top covering (8) of polyurethan colours, polyurethan coatings, carpets or textile lattices is applied onto the respective upper layer (5 or 6).

10. Use of a flooring or similar covering as a width of small rubber parts, especially of waste rubber and a binder, manufactured according to the process specified in claims 1 to 9, with a bottom of textile lattice or carpet, as a flooring for sports grounds and sports halls, featured by the fact

that single widths are, with some pretension, directly laid on a compressed supporting layer (40) consisting of sand, gravel, stone chips, mineral concrete or mixtures of these materials, and their lower faces are glued in such a way that the widths are integrated into a uniform and tied surface using adhesive tapes of which the textile material is identical to that of the bottom layers.

## Revendications

1. Procédé de fabrication d'un matériau de revêtement de sol ou analogue, sous forme d'une bande consistant en un mélange comprimé de particules de caoutchouc, spécialement des déchets de caoutchouc, et d'un adhésif, dûment caractérisé par le fait qu'une couche (5) d'un mélange de déchets de caoutchouc brisés et/ou de granules de caoutchouc neuf ou usagé dont la réaction a été déclenchée, comportant en outre un prépolymère en tant qu'adhésif à composant unique exempt de dissolvant, est continuellement alimentée à une courroie transporteuse (1) rotative sans fin, répartie sur cette dernière d'une façon égale et uniforme et comprimée là-dessus localement pendant peu de temps, couche (5) passant par une chambre climatique (9) pour la durcir vite et uniformément.

2. Procédé selon revendication 1, dûment caractérisé par le fait qu'avant la chambre climatique (9), une deuxième couche (6) d'un mélange de granules EPDM, avec un prépolymère comme adhésif à composant unique exempt de dissolvant, s'applique uniformément répartie sur la couche (5), supportée par la courroie transporteuse (1), et se passe, avec la première couche (5), par la chambre climatique (9) pour la durcir vite et uniformément.

3. Procédé selon revendication 1, dûment caractérisé par le fait qu'après la chambre climatique (9), une deuxième couche (6) d'un mélange de granules EPDM, avec un prépolymère comme adhésif à composant unique exempt de dissolvant, s'applique uniformément répartie sur la couche (5), supportée par la courroie transporteuse (1), et se passe, ensemble avec la première couche (5), par une deuxième chambre climatique (10) pour la durcir vite et uniformément.

4. Procédé selon revendication 2 ou 3, dûment caractérisé par le fait qu'après l'application de la deuxième couche (6), les couches (5, 6) sont localement comprimées pendant peu de temps.

5. Procédé selon revendications 1 à 4, dûment caractérisé par le fait que la compression s'effectue par un dispositif de pression (12) ou un vibrateur.

6. Procédé selon revendication 5, dûment caractérisé par le fait que le dispositif de pression (12) est réalisé en tant que rouleau compresseur.

7. Procédé selon revendications 2 et 3, dûment caractérisé par le fait que la deuxième couche de granules EPDM (6) est colorée.

8. Procédé selon revendication 1 et/ou plusieurs des revendications suivantes, dûment caractérisé par le fait qu'avant l'application de la première couche (5) sur la courroie (1), un treillis ou un tapis textile est transporté sur la courroie (1) et absorbé par la première couche (5) appliquée là-dessus.

9. Procédé selon revendication 1 et/ou plusieurs des revendications suivantes, dûment caractérisé par le fait qu'avant ou après la première chambre climatique (9), un recouvrement supérieur (8) consistant en des colorants et revêtements en polyuréthan ainsi que des tapis ou treillis textiles, est appliqué sur la couche supérieure respective (5 ou 6).

10. Utilisation d'un matériau de revêtement de sol ou analogue sous forme d'une bande de particules de caoutchouc, de déchets de caoutchouc et d'un adhésif, fabriqué selon le procédé détaillé dans les revendications 1 à 9, avec une couche inférieure de treillis ou tapis textiles, en tant que recouvrement pour des terrains et halls de sport, dûment caractérisé par le fait que des bandes individuelles sont posées sur une couche porteuse comprimée (40) de sable, de gravier, de pieraille, de béton minéral ou d'un mélange de ces matériaux, directement, de façon détachée et avec légère prétension, et que leurs côtés inférieurs se collent de sorte que ces bandes forment une surface intégrée et jointe grâce à des rubans adhésifs qui consistent en les mêmes matériaux textiles utilisés pour la couche inférieure.

_Fig. 1_

_Fig. 2_

0 135 595